# EUROPEAN PATENT APPLICATION

(11) **EP 4 443 711 A1**
(43) Date of publication of application: **09.10.2024**
(21) Application number: 23166991.2
(22) Date of filing: 06.04.2023
(51) Int. Cl.: H02K 3/30, H02K 9/19, H02K 21/24, H02K 1/14

(54) **CORE SLEEVE ARRANGEMENT FOR AN AXIAL FLUX MACHINE**

(71) Applicant: Magnax, 8500 Kortrijk (BE)
(72) Inventor: LEIJNEN, Peter, 8500 Kortrijk (BE)
(74) Representative: IP HILLS NV

(57) **Abstract**

A stator (100) for an axial flux machine, comprising:
- a plurality of stator members (200), each comprising a core sleeve (109) placed between the core (105) and the coil (106);
- a housing encompassing the stator members (200),
wherein for each of the stator members (200):
- the core sleeve (109) at least partially extends between the top (111) and bottom wall (110), thereby defining a cavity (600, 700) in the housing, adapted to receive a cooling fluid flowing at the outside of the core sleeves (109);
- at least some of the consecutive turns of the coil (106) are spaced apart, thereby defining fluid passages (602) towards the core sleeves (109),
such that a cooling fluid under pressure supplied to the cavity (600, 700) causes a pressure difference between the outside and inside of each core sleeve (109), thereby pressing the core sleeves (109) against the respective cores (105).

## Description

### Field of the Invention

The present invention generally relates to the field of axial flux machines. In particular, a stator for an axial flux machine is presented, allowing for an improved electrical insulation between the coils and respective coils, while obtaining an increased cooling efficiency and improved liquid sealing.

### Background of the Invention

An axial flux machine is a type of electrical machine wherein a flux is generated in axial direction, the latter being the direction of the rotational axis. Typically, an axial flux machine comprises a disk- or ring-shaped rotor and stator, both having a central axis corresponding to the rotational axis of the machine, the stator and rotor being axially spaced apart by a narrow air gap. The rotor comprises magnetic material, typically permanent magnets, generating an axial magnetic flux. The stator comprises a plurality of coils in which currents may run. Typically, each of the stator coils is wound around a core made of ferromagnetic material, to direct and focus the magnetic flux. During motor operation, the rotor is driven by magnetic fields generated by the stator currents, while in generator condition currents are induced in the stator coils due to the rotation of the rotor. Different topologies are known for axial flux machines, for example comprising one rotor disk and one stator disk, one rotor disk and two stator disks, or two rotor disks positioned on both sides of a stator disk. The axial flux machine may be of the torus type, having a stator yoke, or may be of the yokeless type, not having a stator yoke.

The stator design of an axial flux machine raises some technical challenges, in particular with respect to electrically isolating the coils from the cores, and with respect to cooling of the stator elements. These challenges are particularly relevant in an axial flux machine of high power which operates at high voltage and speed.

Indeed, when the axial flux machine operates, a voltage difference arises between the coils of the machine and the respective cores around which the coils are wound. Therefore, to prevent that electrical current may flow between the winding and the core, the coils must be electrically isolated from the cores. The voltage difference occurring between the coils and respective cores is dependent on the operating voltage of the motor. In electric vehicles, there exists a clear trend towards ever higher operating voltages, since this increases the vehicle's range, charging speed and efficiency. Therefore, for the motor to be able to operate safely in such an application, high demands are placed on the electric insulation between the coils and the cores. The effectiveness of this insulation is determined by the electric properties of the insulating material, and on the extent to which the isolation physically shields the coils from the cores. High voltages can bridge a certain distance or gap between conductors. Therefore, even a small breach or split in the insulating material between the coil and the core can allow an electric arc to form, creating a short circuit.

Cooling of the stator may be done in various ways. For example, in a high-performance axial flux machine, the stator may be liquid-cooled, wherein a cooling liquid is circulated inside a hollow stator housing, thereby directly submerging the coils in the cooling liquid. In such a stator, the stator housing needs to be perfectly fluid tight to prevent leakage of the cooling liquid, thereby presenting an additional technical challenge.

For electrically isolating the cores from the coils, typically an insulating layer is placed between the coils and respective cores. In solutions known in the prior art, the insulating layer is made of an electrically insulating sheet that is wrapped around the core, for example a sheet of Nomex paper. Such an insulating sheet may e.g. be used in combination with a liquid-cooled stator as disclosed in WO2010/092400 or EP2606561B1. However, for the insulating layer to fit over the core, the insulating layer needs to be slightly over-dimensioned, to compensate for manufacturing tolerances on the core and the insulating layer. A gap thus exists between the core and the insulating layer, thereby increasing the thermal resistance between the core and the insulating layer. As such, the amount of heat that can be extracted from the cores by the cooling liquid is substantially decreased, thus decreasing the power of the motor. Moreover, during operation the gap may get filled with stationary cooling liquid, thereby further impacting the heat transfer from the cores. Furthermore, the insulating layer may not fit perfectly between the discoid walls of the housing, thereby potentially leaving a non-insulated gap between a coil and the core around which the coil is wound. Such a gap may allow an electrical arc to form, creating a shortcut.

Moreover, in WO2010/092400, the sealing of the housing is realized by extending the discoid walls of the housing through the airgap, such that the end faces of the ferromagnetic cores are covered by the discoid walls. However, extending the discoid walls into the air gap, decreases the mechanical air gap of the machine. This tightens the manufacturing tolerances because there is less available space between the rotor and the stator to take up any mechanical deviations, which thus increases production cost and complexity. Moreover, also the risk is increased of the rotor colliding with the stator due to mechanical disturbances to the machine such as shock or vibrations. In EP2606561B1, the liquid sealing of the housing is realized by overmoulding the end faces of the ferromagnetic cores into the discoid walls of the housing. This solution thus relies on establishing a liquid-tight seal by overmoulding two dissimilar materials - of the housing and the cores respectively - which is challenging due to the difference in thermal expansion between these materials and the difficulty in establishing reliable adherence between the dissimilar materials of the housing and the cores.

In other solutions known in the prior art, the insulating layer between a core and coil is provided as a rigid part, for example being moulded from an electrically insulating material, e.g. a plastic. CN212969228U presents a solution wherein an insulating chamfering component is arranged on the outside of the iron core body, being arranged at least near the side corners of the core body, such that the windings wound on the iron core are spaced from the core. In US20150229177A1 an insulating former, composed of a rigid sleeve and two side covers, is used to separate the cores from the respective coils. The text mentions that the sleeve, e.g. made of a polyester material, should be made as thin as possible, however being subject to a minimum thickness determined by the strength of the insulating former. In both example solutions, the rigid part for insulating the cores from the coils, forms an additional, relatively thick layer between the core and respective coil, thereby impeding an efficient heat transfer from the cores.

It is an objective of the present invention to disclose an axial flux machine, that resolves one or more of the above-described shortcomings of the prior art solutions. More particularly, it is an objective to present a stator for an axial flux machine, that allows for an improved electrical insulation between the coils and respective coils, while obtaining an increased cooling efficiency and improved liquid sealing.

### Summary of the Invention

According to a first aspect of the present invention, the above identified objectives are realized by a stator for an axial flux machine defined by claim 1, the stator comprising:
- a central axis in axial direction corresponding to the rotational axis of the axial flux machine when mounted;
- a plurality of stator members, being arranged rotational symmetrically around the central axis, wherein each of the stator members comprises:
   ∘ a ferromagnetic core;
   ∘ a coil, comprising a plurality of turns wound around the core;
   ∘ a core sleeve, placed between the core and the coil, having an inside facing the core and an outside facing the coil;
- a housing encompassing the stator members, the housing comprising a top wall, a bottom wall, an inner circumferential wall, and an outer circumferential wall, the circumferential walls extending between the top and bottom wall, and the housing further comprising one or more ports adapted for supplying a cooling fluid, wherein for each of the stator members:
- the core sleeve at least partially extends between the top and bottom wall, thereby defining a cavity in the housing, adapted to receive a cooling fluid flowing at the outside of the core sleeves;
- at least some of the consecutive turns of the coil are spaced apart, thereby defining fluid passages towards the core sleeves,
such that a cooling fluid under pressure supplied to the cavity causes a pressure difference between the outside and inside of each core sleeve, thereby pressing the core sleeves against the respective cores.

Thus, the invention concerns a stator of an axial flux machine. The latter may equally be referred to as, for example, an axial air-gap electric motor or generator, or an axial flux permanent magnet machine. An axial flux machine is a type of electrical machine wherein a flux is generated in axial direction, the latter being the direction of the rotational axis. Typically, the machine is suited to operate as a motor and as a generator, depending on the working condition. The axial flux machine has at least one stator and at least one rotor. The rotor comprises magnetic material, typically permanent magnets, generating an axial magnetic flux. During operation, the stator remains stationary, while the rotor, being mounted on the shaft, rotates during operation of the machine. Typically, the stator and rotor each comprise a disk- or ring-shaped component, referred to as a stator disk respectively rotor disk. The stator disk and rotor disk are axially spaced apart by a narrow air gap. Different topologies are possible. For example, the machine may comprise one rotor disk and one stator disk, one rotor disk and two stator disks, or two rotor disks and one stator disk. The axial flux machine may be of the torus type, having a stator yoke, or may be of the YASA type, not having a stator yoke. The latter machine is also referred to as, for example, a yokeless and segmented armature (YASA) motor or generator, or simply a yokeless axial flux machine.

The stator comprises a plurality of stator members, of which the arrangement is typically rotationally symmetrical with respect to the central axis. Every stator member comprises a coil and a core made of ferromagnetic material, each coil having a central axis in axial direction. A coil comprises a plurality of turns, wound around the ferromagnetic core. During motor operation, the rotor is driven by magnetic fields generated by stator currents running in the coils, while in generator condition currents are induced in the stator coils due to the rotation of the rotor. In an embodiment, each of the cores may comprise an elongated central part, e.g. referred to as core bar, and pole shoes, positioned at both opposing ends of the core bar. In another embodiment, no such pole shoes are present.

The stator further comprises a housing, wherein the housing comprises a top wall, a bottom wall and two circumferential walls. The top and bottom wall serve as opposing cover plates, and are typically provided as two parallel discoid walls. The top and bottom wall are connected by circumferential walls extending in axial direction, one circumferential wall positioned at the outer circumference and one circumferential wall positioned at the inner circumference. The stator members are placed between the inner and outer circumferential wall. In an embodiment, the stator cores are completely located inside the stator housing, thus not extending through the top and bottom wall. In another embodiment, the stator cores extend through holes provided in the top and bottom wall. Thus, in the latter case, when two rotor disks are provided on both sides of the stator disk, the end faces of the ferromagnetic core, are in contact with the air gap, the end faces being the surfaces of the ferromagnetic cores that face the two respective rotors. In any embodiment the housing thus encompasses the stator members, though in particular embodiments the stator members may be in contact with the surroundings of the housing via the aforementioned holes.

Apart from the top wall, bottom wall and circumferential walls, the stator housing may as well comprise an internal structure. For example, the stator housing may comprise internal walls positioned between adjacent stator members, e.g. for guiding the stator cooling fluid. Typically, such guiding walls extend in radial direction and in axial direction. The internal walls or guiding walls may connect the bottom wall and top wall. In another embodiment, no such guiding walls or other type of internal structure are present.

The housing of the stator further comprises one or more ports adapted for supplying a cooling fluid. During operation, the stator is thus liquid-cooled, wherein a cooling liquid, e.g. oil or water, is supplied to the inside of the housing via the one or more ports. The cooling liquid is thus circulated between the stator members, thereby being in contact with the coils and extracting heat from the stator members.

Every stator member comprises a core sleeve, placed between the core and the coil. A sleeve refers to a hollow structure, wherein the core is placed inside the hollow sleeve. The sleeve is thus placed around the core, and the coil is placed around the sleeve. The side of the sleeve facing the core is referred to as the inside, and the side of the sleeve facing the coil is referred to as the outside.

For each of the stator members, the core sleeve at least partially extends between the top and bottom wall. This means that the core sleeve extends in axial direction, and may completely or partially be positioned between the top and bottom wall. In an embodiment, one end of the core sleeve is connected to the top wall of the housing, and the other end of the core sleeve is connected to the bottom wall. In another embodiment, one end of the core sleeve is connected to the first pole shoe of the core, and the other end of the core sleeve is connected to the second pole shoe of the core. The multiple core sleeves, present inside the stator housing, together define a cavity within the housing, the cavity being located at the outside of the respective core sleeves and being hydraulically sealed. Apart from the outside faces of the core sleeves, the cavity is further defined by the bottom wall, the top wall and the circumferential walls. In possible embodiments, the cavity may further be delimited by portions of the cores, or by internal guiding walls positioned between adjacent stator members.

The cavity as defined by the core sleeves and stator housing, is adapted to receive a cooling fluid, the latter being supplied via the one or more ports in the housing. When a cooling fluid is supplied to the internal cavity of the housing, it thus flows at the outside of the core sleeves. For each of the stator members, at least some of the consecutive turns of the coil are spaced apart, thus leaving some space between two neighbouring turns. In this way, fluid passages are defined towards the core sleeves, implying that when a cooling fluid flows inside the cavity, fluid may flow between consecutive coil turns, thereby reaching the sleeves.

Due to the presence of the hydraulically sealed cavity defined by the sleeves, and due to the spaces between consecutive turns of the coils, a cooling fluid under pressure that is supplied to the cavity, causes a pressure difference between the outside and inside of each core sleeve. Thus, the stator design is such that, during operation, a low pressure is maintained at the inside of the sleeves, while the flowing cooling fluid causes a higher pressure at the outside of the sleeves. As a result of this pressure difference, the core sleeves are pressed against the respective cores. Consequently, any gaps that were present between the cores and respective sleeves before supplying the cooling fluid, e.g. due to irregularities at the core surfaces or due to the sleeves' cross section being somewhat larger than the cores' cross section, will be closed. For this purpose, the sleeves are preferably provided in a flexible or elastic material, such that an elastic deformation of a sleeve occurs when being pressed against the respective core.

The invention goes along with multiple advantages. Firstly, due to the sleeves being pressed against the cores during operation of the machine, no gaps remain between the sleeves and respective cores, and no static cooling fluid my reside between the cores and respective sleeves. This contributes to an improved heat transfer from the cores to the cooling fluid, thereby increasing the cooling efficiency and motor power. It also facilitates assembly of the stator, as the sleeve may be slightly over-dimensioned to compensate for manufacturing tolerances, thereby guaranteeing the sleeve to fit over the core and avoiding that cores or sleeves would get damaged during assembly. The latter is especially relevant when the cores are split into two parts, such that during assembly, the individual core parts need to be slid into the sleeve, thereby entailing the risk of damaging the sharp edge at the interface of a core part.

Secondly, the invented core sleeve solution allows the sleeves to be placed such that the coils are completely shielded from the cores, thereby avoiding that an electrical arc may be formed. An improved electrical insulation is thus obtained, thereby guaranteeing a safe operation of the machine, even at high voltages. Summarized, the invention guarantees the required electrical insulation, while at the same time allowing for an optimal cooling of the stator members.

Finally, the invented solution contributes to an improved sealing of a liquid-cooled stator. Indeed, the sleeves together define a cavity inside the housing, wherein the cooling fluid flows, and which may easily be sealed. This implies that, for obtaining liquid-sealing, it is not required to have discoid walls that are fully closed and cover the ferromagnetic cores. A stator design thus can be used wherein the cores extend through holes in the top and bottom plate, thereby allowing for less stringent manufacturing tolerances with respect to the mechanical air gap, and a decreased risk of the rotor colliding with the stator. Moreover, the sleeves may be easily sealed with respect to the housing and/or cores, e.g. by means of glue, such that a more reliable sealing is obtained then when sealing would rely on overmoulding the dissimilar materials of the cores and the discoid walls.

Optionally, according to claim 2, each of the core sleeves comprises a flexible material. A flexible material refers to a material that is non-rigid, and may be easily deformed without breaking or without leaving any plastic deformation. For example, it is an elastic material like a synthetic elastomer, or a fabric. As such, under influence of the cooling fluid, the sleeve conforms to the shape of the core.

Optionally, according to claim 3, each of the core sleeves comprises an elastic material, such that the pressure difference causes the core sleeves to be elastically deformed while being pressed against the respective cores. An elastic material refers to a material that is stretchable, i.e. a material that tends to get back to its original shape after getting stretched by an external force. Elastic materials are e.g. elastic polymers, elastomers, elastically deformable types of plastic, or rubbers. Thus, under influence of the cooling fluid, the sleeve gets elastically deformed, while after taking away the fluid pressure, the sleeve returns to its original shape without being permanently deformed. As such, under influence of the cooling fluid, the sleeve conforms to the shape of the core, thereby closing any gaps that may be present between the core and the sleeve before supplying the cooling fluid. Moreover, during manufacturing, the sleeve may be stretched before being slid over the core, thereby allowing for a close fit between the sleeve and core. Even when such a close fit applies, small gaps may remain between the sleeve and core, e.g. due to irregularities on the core's surface.

Optionally, according to claim 4, the pressure difference causes any gaps, present between the sleeves and the respective cores before supplying the cooling fluid, to be closed while pressing the sleeves against the respective cores. Before supplying the cooling fluid, gaps may potentially be present, e.g. due to irregularities in the core surface, manufacturing tolerances, or an intended clearance between the sleeve and the core required to allow sliding of the sleeve over the core.

Optionally, according to claim 5, the cavity defined by the outside of the core sleeves and the housing is hydraulically sealed, thereby preventing cooling fluid to flow towards the inside of the core sleeves. Sealing of the sleeves may be done with respect to the housing and/or with respect to the cores. Because of the cavity being sealed, no cooling fluid may enter between the sleeves and respective cores, thereby allowing for the pressure difference between the outside and the inside of the respective sleeves.

Optionally, according to claim 6, each of the core sleeves is hydraulically sealed at both ends, with respect to the housing and/or with respect to the core. Every core sleeve extends in axial direction and has two opposing ends, namely a top end, at the side of the top wall, and a bottom end, at the side of the bottom wall. Both sleeve ends are hydraulically sealed, e.g. by providing glue or a rubber material between the sleeve ends and the housing walls or between the sleeve ends and a core's pole shoes, or by pressing the core sleeve ends against the housing or core.

Optionally, according to claim 7, each of the core sleeves is connected to the bottom wall and to the top wall, and/or is connected to the core, such that the cavity is at least partially delimited by the outside of the core sleeves, the circumferential walls, and the top and bottom wall. In an embodiment, the cavity within the housing is merely bounded by the outside of the multiple core sleeves, the two circumferential walls, and the top and bottom wall. Additionally, the cavity may be bounded by the outside of guiding walls, the latter being positioned between adjacent stator members. In another embodiment, the cavity within the housing is bounded by the outside of the multiple core sleeves, the two circumferential walls, the top and bottom wall, and portions of the cores. Additionally, the cavity may be bounded by the outside of guiding walls, the latter being positioned between adjacent stator members.

Optionally, according to claim 8, each of the core sleeves is hydraulically sealed at both ends, at the position of the connections to the top and bottom wall and/or said connections to the core. For example, the connections are provided by means of glue, the latter also ensuring a liquid-sealed connection.

Optionally, according to claim 9, the housing comprises guiding walls, any of the guiding walls positioned between adjacent stator members and extending between the top and bottom wall, the side faces of said guiding walls contributing to delimiting said cavity. The guiding walls, also referred to as internal walls or radial walls, make part of an internal structure of the stator housing. A guiding wall is positioned between the top and bottom wall of the housing, thus extending in axial direction, and is positioned between two adjacent stator members, thus extending in radial direction. The guiding walls define fluid passages, such that cooling fluid flows between a coil and respective guiding wall. Typically, such guiding walls contribute to guiding the cooling fluid, e.g. such that the fluid is forced to flow against the coils. When guiding walls are present, their side faces, or portions thereof, form boundaries of the cavity inside the stator housing. For example, in an embodiment, the cavity within the housing is delimited by the outside of the multiple core sleeves, the two circumferential walls, the top and bottom wall, and the outside of the radial walls.

Optionally, according to claim 10, each of the core sleeves comprises a polymer material. For example, the core sleeves are made of an elastically deformable type or plastic, rubber, etc.

Optionally, according to claim 11, the polymer material comprises a thermally conductive filler material. A conductive filler may be added in the polymer material of the sleeve to enhance the thermal conductivity of the sleeve material. This contributes to an improved heat extraction from the cores.

Optionally, according to claim 12, the turns of the coils have a tapered cross-section, such that spacings are present between the turns of the coils having a V-shaped cross section, the size of the spacings diminishing in the direction towards the core. This has the advantage that the flow of cooling liquid towards the core sleeve is increased, thereby contributing to an improved heat extraction from the cores.

Optionally, according to claim 13, the top and bottom wall each comprise multiple holes, adapted to receive the respective cores, such that in mounted condition the cores extend through the corresponding holes. Thus, the end faces of the ferromagnetic cores are in contact with the air gap, and are not covered by the top or bottom wall. In an embodiment, a sealing, e.g. by means of glue, may be present between respective cores and the top wall, and between respective cores and the bottom wall.

In an embodiment, each of the cores comprises a central portion extending in axial direction, the central portion being transversally split into at least two separate parts, the separate parts being mechanically connected to one another in mounted condition.

In an embodiment, each of the cores comprises pole shoes at opposite sides of the central portion, the pole shoes being adapted to interlock with the top and bottom wall, thereby securing the cores to the housing.

In an embodiment, the cores are interconnected through a ferromagnetic stator yoke. In another embodiment, the stator is yokeless.

According to a second aspect of the present invention, the above identified objectives are realized by an axial flux machine, defined by claim 14, the axial flux machine comprising a stator according to the first aspect of the invention.

According to a third aspect of the present invention, the above identified objectives are realized by a method for operating a stator of an axial flux machine, defined by claim 15, the method comprising:
- providing a stator of an axial flux machine, the stator comprising:
   ∘ a central axis in axial direction corresponding to the rotational axis of the axial flux machine when mounted;
   ∘ a plurality of stator members, being arranged rotational symmetrically around the central axis, wherein each stator member comprises:
      ▪ a ferromagnetic core;
      ▪ a coil, comprising a plurality of turns wound around the core;
      ▪ a core sleeve, placed between the core and the coil, having an inside facing the core and an outside facing the coil;
   ∘ a housing encompassing the stator members, the housing comprising a top wall, a bottom wall, an inner circumferential wall, and an outer circumferential wall, the circumferential walls extending between the top and bottom wall,
      wherein for each of the stator members:
   ∘ the core sleeve extends between the top and bottom wall, thereby defining a cavity in the housing, and
   ∘ at least some of the consecutive turns of the coil are spaced apart, thereby defining fluid passages;
- supplying a cooling fluid under pressure to the housing, through one or more ports in the housing;
- letting the cooling fluid flow in the cavity, at the outside of the core sleeves;
- letting the cooling fluid flow towards the outside of the core sleeves through the fluid passages;
- pressing the core sleeves against the respective coils, due to the pressure difference established between the outside and inside of each core sleeve after supplying the cooling fluid.

### Brief Description of the Drawings

Fig. 1 illustrates a stator and two rotor disks, according to an embodiment of the invention.
Fig. 2 illustrates a stator, of which the top wall is removed, according to an embodiment of the invention.
Fig. 3 illustrates the liquid cooling of the stator, according to an embodiment of the invention.
Fig. 4 - 9 each give a cross section of the stator, according to a curved plane parallel to the axial direction, thereby illustrating various embodiments of a core sleeve arrangement according to the invention.

### Detailed Description of Embodiment(s)

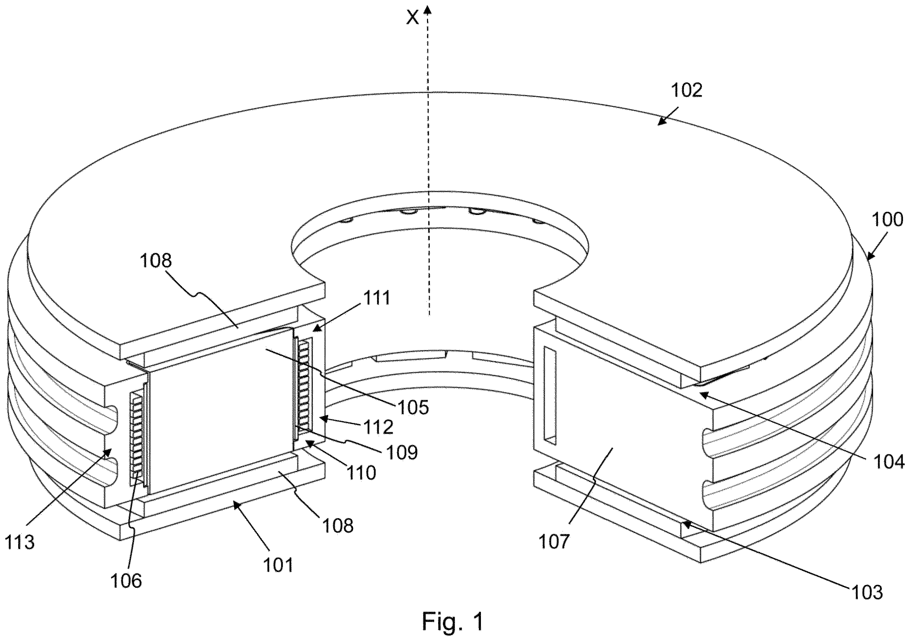

Fig. 1 illustrates a stator 100 and rotor of an axial flux machine. Two rotor disks 101, 102 are positioned on both sides of the stator disk 100. The stator disk 100 and the first rotor disk 101 are axially spaced apart by a first air gap 103, while the stator disk 100 and the second rotor disk 102 are axially spaced apart by a second air gap 104. The stator disk 100 and rotor disks 101, 102 have a central axis in axial direction, referred to as 'X' in the figure and corresponding to the rotational axis of the machine. The rotor disks 101, 102 both comprise magnets 108. The magnets 108 generate a magnetic flux in axial direction X.

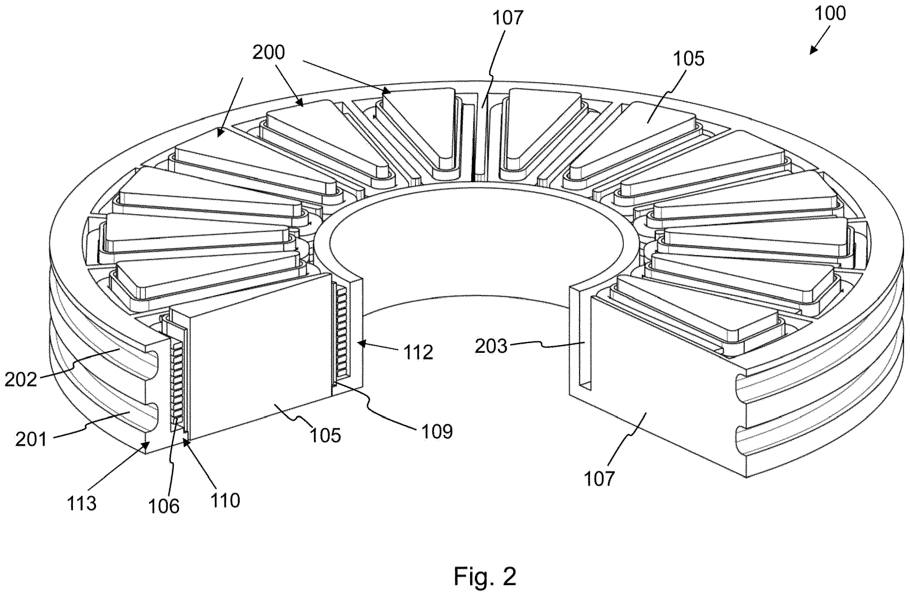

Fig. 2 shows the stator 100, of which the top wall 111 has been removed. The stator 100 comprises a plurality of stator members 200 being arranged rotationally symmetrical with respect to the central axis. Every stator member 200 comprises a coil or winding 106, wound around a ferromagnetic core 105, the cores 105 extending in axial direction. The stator housing comprises a bottom wall 110 and a top wall 111, provided as discoid walls perpendicular to the axial direction 115 and serving as cover plates. The stator housing further comprises an inner circumferential wall 112 and an outer circumferential wall 113, both circumferential walls 112, 113 extending in axial direction and connecting the bottom wall 110 to the top wall 111. Moreover, the stator housing comprises internal walls or guiding walls 107, any of the guiding walls 107 extending in axial and radial direction, and being positioned between two adjacent stator members 200. The guiding walls 107 are connected at one end to the outer circumferential wall 113. In axial direction, the guiding walls 107 extend between the bottom wall 110 and top wall 111, thereby connecting both cover plates 110, 111.

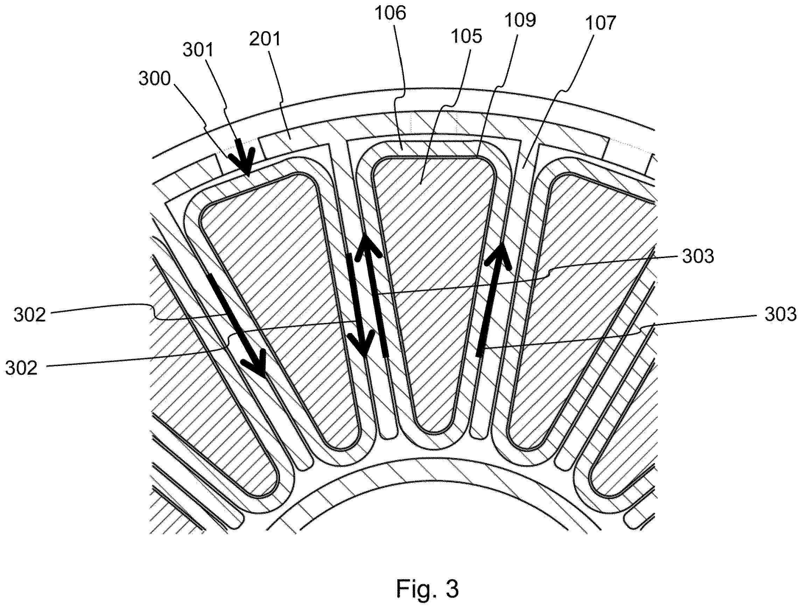

The outer circumferential wall 113 comprises outer channels 201 and 202, while the space between the guiding walls' endpoints and the inner circumferential wall 112 defines an inner channel 203. The channels 201, 202 and 203 make part of a cooling circuit for stator cooling, intended for liquid cooling of the stator members 200. Such a stator cooling solution is known in the prior art, and is e.g. described in EP3764526A1. The outer and inner channels 201, 202, 203 are arranged to let a stator cooling fluid flow tangentially about the central axis. On the other hand, the guiding walls 107 are arranged to let the stator cooling fluid flow in radial direction. For this purpose, radial fluid passages are available between every coil 106 and an adjacent radial wall 107. The cold channel 201 comprises supply ports 300, the latter not being represented in Fig. 1 and 2, but being visible in Fig. 3. Fig. 3 schematically illustrates the stator fluid circulation, indicated by arrows. In the channel 201, the cooling fluid circulates in tangential direction. Via the supply ports 300, the cooling fluid enters the inside of the stator housing, see arrow 301, after which it is guided in radial direction, towards the inner circumference, see arrows 302. While flowing via the radial fluid passages, the fluid is guided by the radial walls 107, thereby being forced to flow against the coils 106 and evacuating heat from the coils 106. The fluid is then collected in the inner channel 203. For an adjacent stator member, the radial flow occurs in the opposite direction, from inner to outer circumference, see arrows 303. The heated fluid is collected in the hot channel 202, the latter being connected to ports for draining the stator cooling fluid.

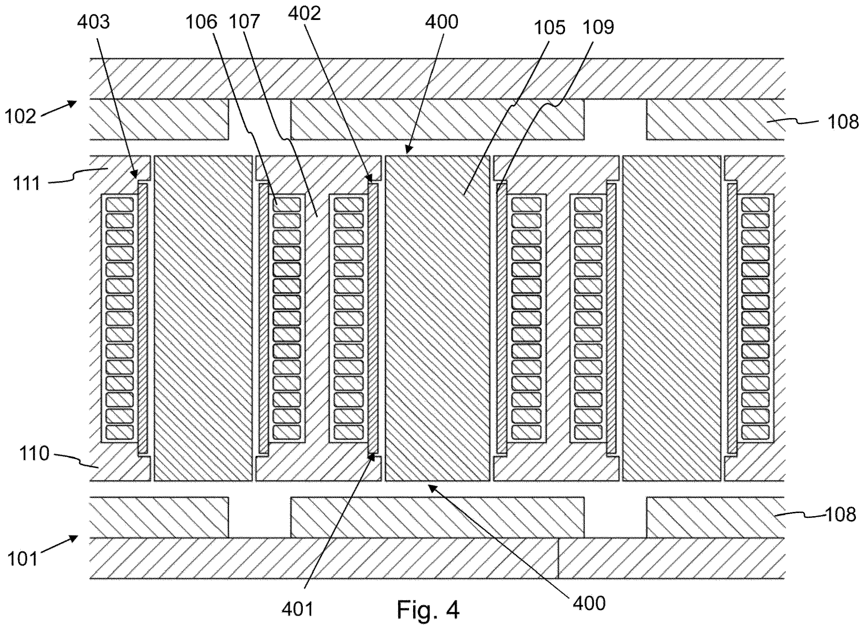

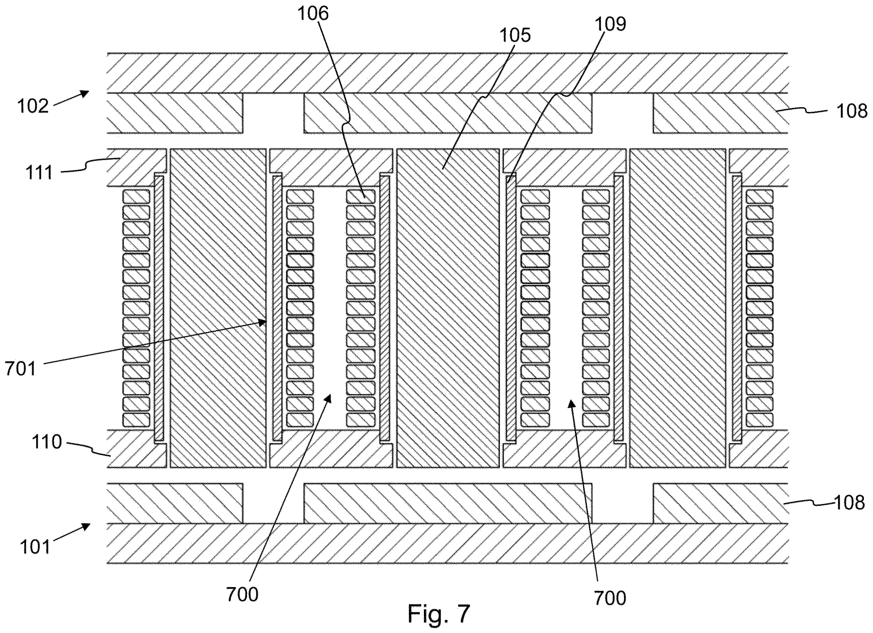

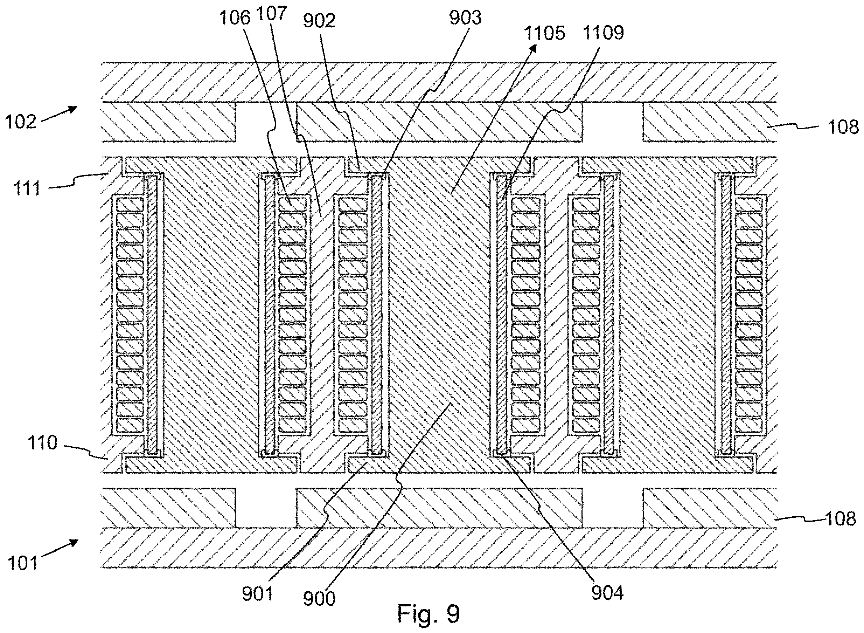

Fig. 4 to Fig. 8 illustrate a first embodiment of a core sleeve arrangement according to the invention. In Fig. 4 to Fig. 6 the stator housing 100 comprises guiding walls 107, like in Fig. 1 and 2, while in Fig. 7 to Fig. 8 a variant without guiding walls is presented. Fig. 9 illustrates a second embodiment of a core sleeve arrangement according to the invention.

Fig. 4 shows the sleeves 109, having a top end 402, at the side of the top wall 111, and a bottom end 401, at the side of the bottom wall 110. A sleeve 109 is positioned between a core 105 and a coil 106, wherein the outside of the sleeve 109 faces the coil 106, and the inside of the sleeve 109 faces the core 105. The height of the sleeves 109, measured in axial direction, is larger than the height of the coils 106, thereby shielding the cores 105 form the coils 106. A radial wall 107 is placed between any pair of adjacent coils 106, and connects the top wall 111 to the bottom wall 110. The cores 105 extend through holes 400 in the top and bottom wall 111, 110, such that the end faces of the cores 105 are in contact with the respective air gaps 103, 104. The sleeves 109 extend in axial direction, and both ends 401, 402 are connected to the bottom wall 110 and top wall 111 respectively. The sleeves are mainly positioned between the top wall 111 and bottom wall 110, but not completely, due to recesses 403 in the walls 110 and 111.

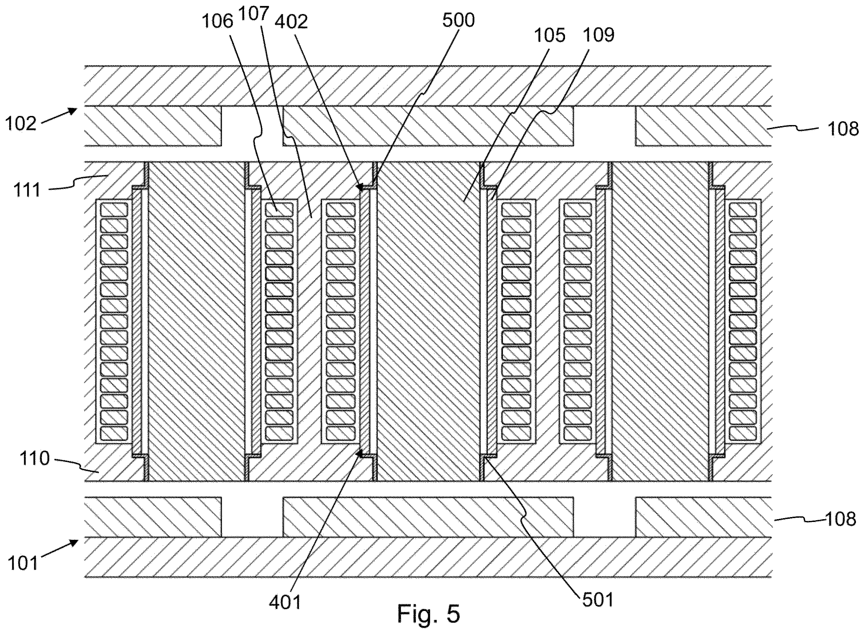

The core sleeves 109 are sealed at both ends 401, 402, with respect to the top wall 111 and bottom wall 110. A possible way to provide such hydraulic sealing is illustrated in Fig. 5. In this embodiment, the sleeve end 401 is connected to the bottom wall 110 by means of glue 501, and the sleeve end 402 is connected to the top wall 111 by means of glue 500, wherein the glue ensures the hydraulic sealing. As can be seen in the figure, the glue 500, 501 further extends between the core 105 and the top and bottom wall respectively, thereby also sealing the cores 105 with respect to the housing walls.

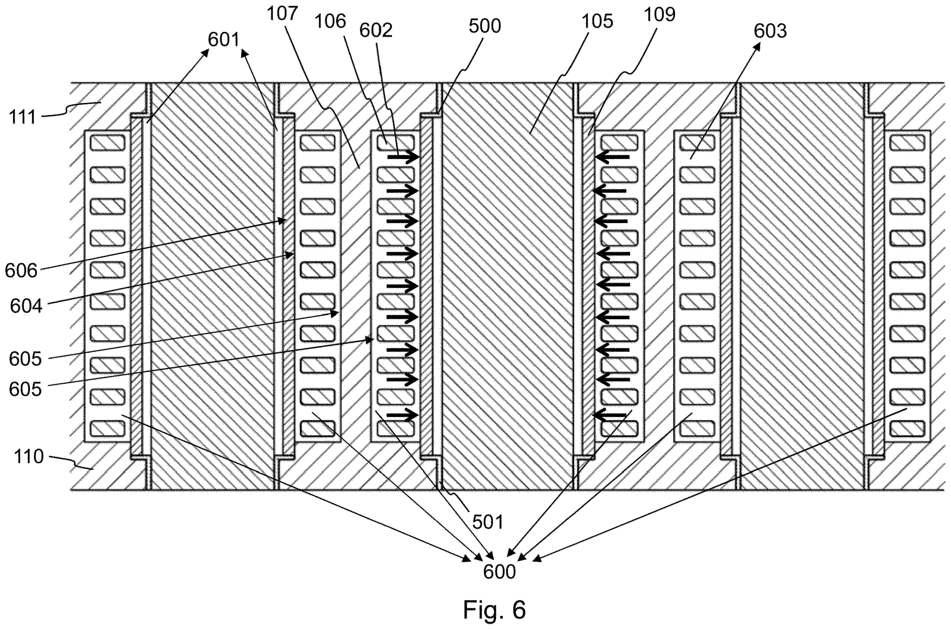

In this way, a hydraulically sealed cavity 600 is obtained inside the stator housing, as is further illustrated in Fig. 6. The cavity 600 is delimited by the outside 604 of the core sleeves 109, the side faces 605 of the guiding walls 107, the top wall 111, bottom wall 110, and circumferential walls 112, 113. The cavity 600 is adapted to receive a cooling fluid, supplied via the ports 300. Fig. 6 further illustrates that spaces 603 are present between consecutive turns of the coils 106. For illustrative purposes, the spaces 603 are presented excessively large in the figure.

Before supplying a cooling fluid to the cavity 600, gaps 601 exist between the sleeves 109 and cores 105, e.g. due to over-dimensioning of the sleeves 109 with respect to the cores 105. When a cooling fluid, such as oil or water, is supplied to the cavity 600, the fluid flows at the outside 604 of the sleeves 109, thus flowing between the sleeves 109 and guiding walls 107. Due to the hydraulic sealing, no fluid may enter between the inside 606 of the sleeves 109 and cores 105. Consequently, a pressure difference exists between the outside 604 of the sleeves 109 and the inside 606 of the sleeves 109. While flowing, the cooling fluid enters the gaps 603 between the turns, the latter defining fluid passages 602 towards the sleeves 109. In the shown embodiment, the sleeves 109 are made of an elastic type of plastic, such that the sleeves 109 elastically deform and are pressed against the cores 105. As a result, the gaps 601, initially being present between the cores 105 and sleeves 109 are closed, thereby obtaining an improved heat extraction from the cores 105. Remark that the deformed state of the sleeves 109, wherein the gaps between sleeves 109 and cores 105 are closed, is not shown in Fig. 6.

Fig. 7 shows another variant of a stator, wherein a similar core sleeve arrangement as in Fig. 4-6 is used. Different from the previous figures, the stator housing does not comprise guiding walls 107. In this embodiment, a hydraulically sealed cavity 700 is present, the cavity 700 being delimited by the outside of the core sleeves 109, the top wall 111, bottom wall 110, and circumferential walls 112, 113. Similar to Fig. 4-6, the cavity 700 is adapted to receive a cooling fluid, and due to the pressure difference between the outside and inside of the sleeves 109, the sleeves 109 are pressed against the cores 105, thereby closing the gaps 701 between the sleeves 109 and respective cores 105.

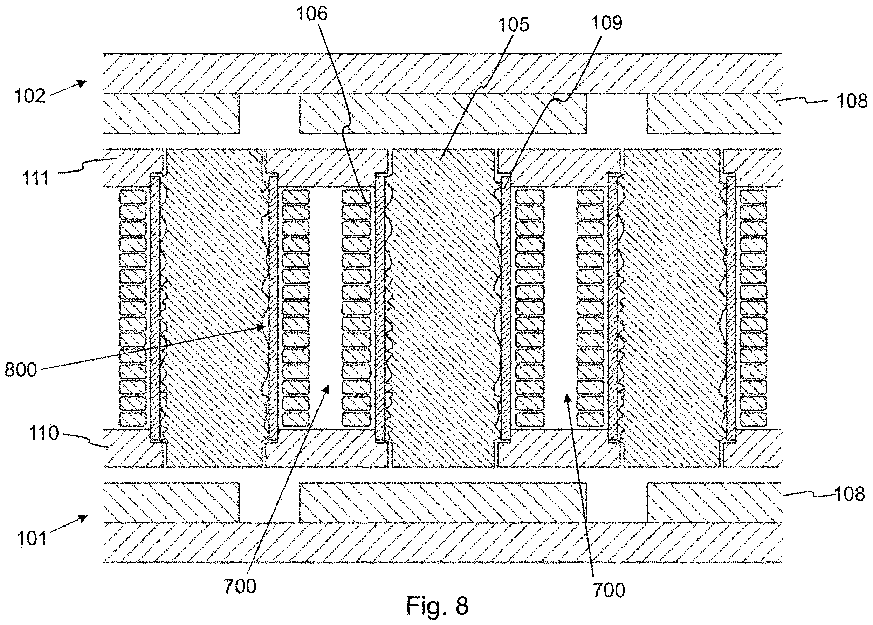

In the illustrations given in Fig. 4 to 7, the gaps 601, 701 between the sleeves 109 and respective cores 105 are present as slits, extending over the height of the sleeves 109. Fig. 8 illustrates that gaps between the sleeves 109 and respective cores 105 may also arrive as small openings 800, being present due to irregularities at the surface of the cores 105. Therefore, even if elastic sleeves 109 are used, being tightened around the cores 105, the invented core sleeve arrangement has the advantage that any small openings 800 are closed under influence of the cooling fluid.

Fig. 9 shows a second embodiment of a core sleeve arrangement. In this embodiment, every core 1105 comprises a centrally positioned core bar 900, and two pole shoes 901, 902. The pole shoes 901, 902 extend through holes in the top and bottom wall 111, 110, such that their end faces are in contact with the respective air gaps 103, 104. Any of the sleeves 1109 extends in axial direction, and is positioned between a core 1105 and coil 106. The bottom end of the sleeve 1109 is connected to the first pole shoe 901, and the top end of the sleeve 1109 is connected to the second pole shoe 902. The sleeves 1109 are sealed with respect to the cores 1105, and with respect to the top and bottom wall 111, 110, by means of glue 903, 904. Similar to the first embodiment, the sleeves 1109 contribute to defining a hydraulically sealed cavity inside the stator housing. In the embodiment of Fig. 9, the cavity is delimited by the outside of the core sleeves 1109, the side faces of the guiding walls 107, the top wall 111, bottom wall 110, and circumferential walls 112, 113.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A stator (100) for an axial flux machine, the stator (100) comprising:
- a central axis in axial direction corresponding to the rotational axis of the axial flux machine when mounted;
- a plurality of stator members (200), being arranged rotational symmetrically around the central axis, wherein each of the stator members (200) comprises:
∘ a ferromagnetic core (105);
∘ a coil (106), comprising a plurality of turns wound around the core (105);
∘ a core sleeve (109), placed between the core (105) and the coil (106), having an inside (606) facing the core (105) and an outside (604) facing the coil (106);
- a housing encompassing the stator members (200), the housing comprising a top wall (111), a bottom wall (110), an inner circumferential wall (112), and an outer circumferential wall (113), the circumferential walls (112, 113) extending between the top (111) and bottom wall (110), and the housing further comprising one or more ports (300) adapted for supplying a cooling fluid,
**CHARACTERIZED IN THAT**:
for each of the stator members (200):
- the core sleeve (109) at least partially extends between the top (111) and bottom wall (110), thereby defining a cavity (600, 700) in the housing, adapted to receive a cooling fluid flowing at the outside of the core sleeves (109);
- at least some of the consecutive turns of the coil (106) are spaced apart, thereby defining fluid passages (602) towards the core sleeves (109),
such that a cooling fluid under pressure supplied to the cavity (600, 700) causes a pressure difference between the outside and inside of each core sleeve (109), thereby pressing the core sleeves (109) against the respective cores (105).

2. A stator (100) according to one of the preceding claims,
wherein each of the core sleeves (109) comprises a flexible material.

3. A stator (100) according to one of the preceding claims,
each of the core sleeves (109) comprises an elastic material, such that the pressure difference causes the core sleeves (109) to be elastically deformed while being pressed against the respective cores (105).

4. A stator (100) according to one of the preceding claims,
wherein the pressure difference causes any gaps (601, 800), present between the sleeves (109) and the respective cores (105) before supplying the cooling fluid, to be closed while pressing the sleeves (109) against the respective cores (105).

5. A stator (100) according to one of the preceding claims,
wherein the cavity (600, 700) defined by the outside of the core sleeves (109) and the housing is hydraulically sealed, thereby preventing cooling fluid to flow towards the inside of the core sleeves (109).

6. A stator (100) according to one of the preceding claims,
wherein each of the core sleeves (109) is hydraulically sealed at both ends (401, 402), with respect to the housing and/or with respect to the core.

7. A stator (100) according to one of the preceding claims,
wherein each of the core sleeves (109) is connected to the bottom wall (110) and to the top wall (111), and/or is connected to the core (105), such that the cavity (600, 700) is at least partially delimited by the outside of the core sleeves (109), the circumferential walls (112, 113), and the top (111) and bottom wall (110).

8. A stator (100) according to claim 7,
wherein each of the core sleeves (109) is hydraulically sealed at both ends (401, 402), at the position of said connections to the top (111) and bottom wall (110) and/or said connections to the core (105).

9. A stator (100) according to one of the preceding claims,
wherein the housing comprises guiding walls (107), any of the guiding walls (107) positioned between adjacent stator members (200) and extending between the top (111) and bottom wall (110), the side faces of said guiding walls (107) contributing to delimiting said cavity (600).

10. A stator (100) according to one of the preceding claims,
wherein each of the core sleeves (109) comprises a polymer material.

11. A stator (100) according to claim 10,
wherein the polymer material comprises a thermally conductive filler material.

12. A stator (100) according to one of the preceding claims,
wherein the turns of the coils (106) have a tapered cross-section, such that spacings are present between the turns of the coils (106) having a V-shaped cross section, the size of the spacings diminishing in the direction towards the core (105).

13. A stator (100) according to one of the preceding claims,
wherein the top (111) and bottom wall (110) each comprise multiple holes (400), adapted to receive the respective cores (105), such that in mounted condition the cores (105) extend through the corresponding holes (400).

14. An axial flux machine comprising a stator (100) according to one of the
preceding claims.

15. A method for operating a stator (100) of an axial flux machine, comprising:
- providing a stator (100) of an axial flux machine, the stator (100) comprising:
∘ a central axis in axial direction corresponding to the rotational axis of the axial flux machine when mounted;
∘ a plurality of stator members (200), being arranged rotational symmetrically around the central axis, wherein each stator member (200) comprises:
▪ a ferromagnetic core (105);
▪ a coil (106), comprising a plurality of turns wound around the core (105);
▪ a core sleeve (109), placed between the core (105) and the coil (106), having an inside facing the core (105) and an outside facing the coil (106);
∘ a housing encompassing the stator members (200), the housing comprising a top wall (111), a bottom wall (110), an inner circumferential wall (112), and an outer circumferential wall (113), the circumferential walls (112, 113) extending between the top (111) and bottom wall (110),
wherein for each of the stator members (200):
∘ the core sleeve (109) extends between the top (111) and bottom wall (110), thereby defining a cavity (600, 700) in the housing, and
∘ at least some of the consecutive turns of the coil (106) are spaced apart, thereby defining fluid passages (602);
- supplying a cooling fluid under pressure to the housing, through one or more ports (300) in the housing;
- letting the cooling fluid flow in the cavity (600, 700), at the outside of the core sleeves (109);
- letting the cooling fluid flow towards the outside of the core sleeves (109) through the fluid passages (602);
- pressing the core sleeves (109) against the respective cores (105), due to the pressure difference established between the outside and inside of each core sleeve (109) after supplying the cooling fluid.
